# EUROPEAN PATENT SPECIFICATION

(11) **EP 3 281 462 B1**
(45) Date of publication and mention of the grant of the patent: **30.12.2020**
(21) Application number: 16718519.8
(22) Date of filing: 08.04.2016
(51) Int. Cl.: H04W 4/70, H04W 68/02

(54) **METHODS, WIRELESS COMMUNICATION DEVICE AND RADIO NETWORK NODE FOR MANAGING PAGING**
METHODEN, DRAHTLOSES KOMMUNIKATIONSGERÄT UND FUNKNETZWERKKNOTEN ZUR PAGING VERWALTUNG
PROCÉDÉS, DISPOSITIF DE COMMUNICATION SANS FIL ET NOEUD DE RÉSEAU RADIO DE GESTION DE RADIOMESSAGERIE

(30) Priority: 10.04.2015 US 201562145560 P
(43) Date of publication of application: 14.02.2018
(73) Proprietor: Telefonaktiebolaget LM Ericsson (publ), 164 83 Stockholm (SE)
(72) Inventor: YAVUZ, Emre, 117 50 Stockholm (SE); BERGMAN, Johan, 112 27 Stockholm (SE); GRÖVLEN, Asbjörn, 112 15 Stockholm (SE); TIRRONEN, Tuomas, 00950 Helsinki (FI)
(74) Representative: Zacco Sweden AB
(86) International application number: PCT/SE2016/050298
(87) International publication number: WO 2016/163940

(56) References cited:
- WO-A1-2015/007332
- WO-A1-2015/007332
- HUAWEI ET AL: "Paging transmission for MTC UEs", 3GPP DRAFT; R1-150064, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933281, Retrieved from the Internet: URL:http://www.3gpp.org/ftp/Meetings_3GPP_ SYNC/RAN1/Docs/ [retrieved on 2015-02-08]
- HUAWEI ET AL: "Paging for Rel-13 low complexity MTC", 3GPP DRAFT; R2-150257 PAGING FOR REL-13 LOW COMPLEXITY MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20150209 - 20150212 8 February 2015 (2015-02-08), XP050935582, Retrieved from the Internet: URL:http://www.3gpp.org/ftp/Meetings_3GPP_ SYNC/RAN2/Docs/ [retrieved on 2015-02-08]
- ERICSSON: "Paging for MTC", 3GPP DRAFT; R1-150028 PAGING FOR MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933245, Retrieved from the Internet: URL:http://www.3gpp.org/ftp/Meetings_3GPP_ SYNC/RAN1/Docs/ [retrieved on 2015-02-08]
- ERICSSON: "Paging for Rel-13 low complexity and coverage enhanced UEs", 3GPP DRAFT; R2-150457 - PAGING FOR REL-13 LOW COMPLEXITY AND COVERAGE ENHANCED UES, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Athens, Greece; 20150209 - 20150213 8 February 2015 (2015-02-08), XP050935715, Retrieved from the Internet: URL:http://www.3gpp.org/ftp/Meetings_3GPP_ SYNC/RAN2/Docs/ [retrieved on 2015-02-08]

## Description

### TECHNICAL FIELD

Embodiments herein relate to wireless communication systems, such as cellular networks. In particular, a wireless communication device and a method therein for handling paging messages for paging of wireless communication devices in a wireless communication system as well as a radio network node and a method therein for managing paging requests for instructing the radio network node to page wireless communication devices in a wireless communication system are disclosed. Corresponding computer programs and carriers therefor are also disclosed.

### BACKGROUND

The Release (Rel)-12 work item "Low cost & enhanced coverage Machine Type Communication (MTC) User Equipment (UE) for Long Term Evolution (LTE)" specified a low complexity LTE device for MTC with bill of material approaching that of an Evolved General Packet Radio Service (GRPS) modem using a combination of complexity reduction techniques. It is concluded in the study item documented in Technical Report (TR) 36.888 that a coverage improvement target of 15-20 dB for both Frequency Division Duplex (FDD) and Time Division Duplex (TDD) in comparison to normal LTE footprint could be achieved to support the use cases where MTC devices are deployed in challenging locations, e.g. deep inside buildings, and to compensate for gain loss caused by complexity reduction techniques. The Rel-13 work item on Third Generation Partnership Project Radio Access Network (3GPP RAN abbreviated RP) 141865, "Revised WI: Further LTE Physical Layer Enhancements for MTC" includes three main objectives: (1) specify a new Rel-13 low complexity UE category, (2) LTE coverage improvement corresponding to 15 dB for FDD, and (3) power consumption reduction. Reduced UE bandwidth of 1.4 MHz in downlink and uplink is considered as the most important complexity reduction technique for Rel-13 low complexity UEs. The general objective is to specify a new UE for MTC operation in LTE that also allows for enhanced coverage compared to existing LTE networks and low power consumption. The detailed objectives can be found in RP-141865, "Revised WI: Further LTE Physical Layer Enhancements for MTC".

In section 7.1 of Technical Specification (TS) 36.304 "User Equipment (UE) procedures in idle mode": *7.1 Discontinuous Reception for paging The UE may use Discontinuous Reception (DRX) in idle mode in order to reduce power consumption. One Paging Occasion (PO) is a subframe where there may be P-RNTI* [ed: Paging - Radio Network Temporary Identifier] *transmitted on PDCCH* [ed: Physical Downlink Control Channel] *addressing the paging message. One Paging Frame (PF) is one Radio Frame, which may contain one or multiple Paging Occasion(s). When DRX is used the UE needs only to monitor one PO per DRX cycle. PF and PO is determined by following formulae using the DRX parameters provided in System Information:*
*PF is given by following equation:* $SFN \left[ed:System Frame Number\right] mod T = \left(T div N\right) * \left(UE_ID mod N\right)$ *Index i_s pointing to PO from subframe pattern defined in 7.2 will be derived from following calculation:* $i _ s = floor \left(UE_ID/N\right) mod Ns$ *System Information* [ed: (SI)] *DRX parameters stored in the UE shall be updated locally in the UE whenever the DRX parameter values are changed in SI. If the UE has no IMSI, for instance when making an emergency call without USIM, the UE shall use as default identity UE_ID* = *0 in the PF and i_s formulas above."*

Additionally, for evolved MTC UEs a Machine type communication Physical Downlink Control Channel (MPDCCH) may be used instead of the PDCCH.

Throughout this document, the PO given by the index i_s above is referred to as a default paging occasion.

For Rel-13 low complexity UEs, frequency resources for paging messages are restricted to 1.4 MHz / 6 PRBs. Multiplexing multiple paging records into a paging message may not be feasible due to coverage issues, making it necessary to send separately encoded paging messages for UEs, i.e. one paging identity is transmitted per paging message for such UEs. This restriction combined with limited bandwidth may result in very high utilization of possible paging resources. This causes an increase of blocking probability, i.e. a probability that the Evolved NodeB (eNB) cannot page a particular UE at the earliest possible paging occasion after receiving a paging request from a Mobility Management Entity (MME).

The document HUAWEI ET AL: "Paging transmission for MTC UEs", , vol. RAN WG1, no. Athens, Greece; 20150209 - 20150213 8 February 2015 (2015-02-08), discloses how the paging for Rel-13 MTC UEs in normal CE will be transmitted, how eNB transmits paging for CE in different levels, and how eNB determines the number of repetitions per CE level for paging.

### SUMMARY

The invention is defined by the independent claims. Furthermore, the embodiments of the invention are those defined by the claims. Moreover, examples, aspects and embodiments, which are not covered by the claims are presented not as embodiments of the invention, but as background art or examples useful for understanding the invention.

An object may be to improve paging of wireless communication devices, such as the low complexity UE mentioned above.

According to an aspect, the object is achieved by a method, performed by a wireless communication device, for handling paging messages for paging of wireless communication devices in a wireless communication system as defined by independent claim 1.

According to another aspect, the object is achieved by a wireless communication device configured for handling paging messages for paging of wireless communication devices in a wireless communication system as defined by independent claim 3.

According to a further aspect, the object is achieved by a method, performed by a radio network node, for managing paging requests for instructing the radio network node to page wireless communication devices in a wireless communication system as defined by independent claim 2.

According to yet another aspect, the object is achieved by a radio network node configured for managing paging requests for instructing the radio network node to page wireless communication devices in a wireless communication system as defined by independent claim 4.

In one embodiment, the radio network node receives the paging request and generates the first paging message associated to the first paging occasion in the paging frame. The radio network node also generates the parameter indicating existence of said at least one second paging occasion, e.g. any subframe subsequent to the first paging occasion, i.e. a default paging occasion. Next, the radio network node sends the first paging message and the parameter to the wireless communication device. As an example, the first paging message includes the parameter. Thanks to the parameter the wireless communication device is made aware of the at least one second paging occasion, which may be located within the paging frame, but subsequent in time to the first paging occasion. The wireless communication device receives the first paging message and may check, or read, the parameter. If the parameter indicates that there are at least one second paging occasion, the wireless communication device listens, in the subframes given by the at least one second paging occasion, for further paging messages from the radio network node. In this manner, the wireless communication device may receive paging messages when indicated by the parameter.

An advantage is that the parameter may indicate the at least one second paging occasion, in which a further paging message may be received. In this manner, a number of paging occasion may be increased. Hence, thanks to the at least one second paging occasion blocking probability of paging messages may be reduced. Blocking probability of paging messages refers to that a certain paging message is blocked, i.e. prevented from being sent, due to not being able to multiplex multiple paging messages for the same paging occasion. An available paging occasion is any paging occasion in which the radio network node has not already planned to send a paging message in.

Moreover, thanks to said at least one second paging occasion faster reachability for low complexity UEs when paging may be achieved. A reason for this is that e.g. the second paging message is neither discarded nor postponed to a later paging occasion in a subsequent paging frame, being subsequent to the paging frame in which the first paging message is sent. That is to say, the second paging message need not be postponed to a next possible default paging occasion, instead the said least one second paging occasion may be used for sending of the second paging message.

In some embodiments, queues for paging messages results in a rudimentary way to schedule the paging in time when the paging resources, e.g. the paging occasions, are full, or occupied by e.g. the first paging message. This may result in better utilization of the paging resources.

### BRIEF DESCRIPTION OF THE DRAWINGS

The various aspects of embodiments disclosed herein, including particular features and advantages thereof, will be readily understood from the following detailed description and the accompanying drawings, in which:
Figure 1 is a schematic overview of an exemplifying wireless communication system in which embodiments herein may be implemented,
Figure 2 is a combined signaling and flowchart illustrating the methods herein,
Figure 3 is a block diagram illustrating paging frames,
Figure 4 is another block diagram illustrating paging occasions,
Figure 5 is a further block diagram illustrating paging occasions,
Figure 6 is a flowchart illustrating embodiments of the method in the wireless communication device,
Figure 7 is a block diagram illustrating embodiments of the wireless communication device,
Figure 8 is a flowchart illustrating embodiments of the method in the radio network node, and
Figure 9 is a block diagram illustrating embodiments of the radio network node.

### DETAILED DESCRIPTION

Throughout the following description similar reference numerals have been used to denote similar features, such as nodes, actions, steps, modules, circuits, parts, items elements, units or the like, when applicable. In the Figures, features that appear in some embodiments are indicated by dashed lines.

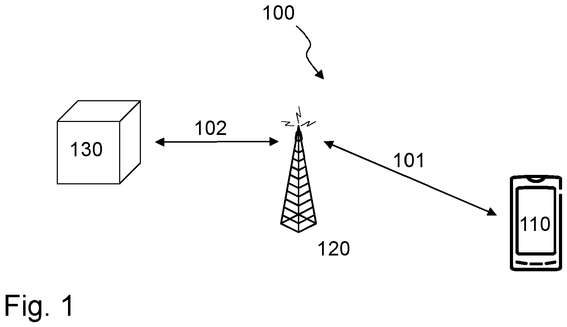

**Figure 1** depicts an exemplifying **wireless communication system 100** in which embodiments herein may be implemented. In this example, the wireless communication system 100 is a Long Term Evolution (LTE) network. In other examples, the wireless communication system 100 may be any cellular communication system, such as a Global System for Mobile Communications (GSM), Universal Mobile Telecommunication System (UMTS) and Worldwide Interoperability for Microwave Access (WiMAX) or the like.

As an example, the wireless communication system 100 manages transmissions in a time structure. The time structure comprises radio frames, e.g. 10 ms in case of LTE. Each radio frame comprises subframes, e.g. 10 subframes in case of LTE.

The wireless communication system 100 may be said to comprise **a wireless communication device 110.** This means that the wireless communication device 110 is present in the wireless communication system 100.

Furthermore, **a radio network node 120** is shown in Figure 1. The wireless communication system 100 may comprise the radio network node 120. In some examples, the wireless communication device 110 is located in the vicinity of the radio network node 120.

The radio network node 120 may **communicate 101,** e.g. send to and/or receive from, with the wireless communication device 110. This communication may include user transmissions and/or control transmissions. The user transmissions may include user data, payload data, content data etc. The control transmissions may include control information relating to e.g. scheduling, authentication, mobility etc.

Moreover, the wireless communication system 100 comprises **a core network node 130,** such as a Mobility Management Entity (MME) or the like.

The radio network node 120 may **communicate 102,** e.g. send to and/or receive from, with the core network node 130. This communication may include user transmissions and/or control transmissions. The user transmissions may include user data, payload data, content data etc.

As used herein, the term "radio network node" may refer to an evolved Node B (eNB), a Radio Network Controller (RNC), a Radio Base Station (RBS), a control node controlling one or more Remote Radio Units (RRUs), an access point or the like.

As used herein, the term "wireless communication device" may refer to a user equipment (UE), a wireless device, a machine-to-machine (M2M) device, an MTC (Machine-Type-Communication) device a mobile phone, a cellular phone, a Personal Digital Assistant (PDA) equipped with radio communication capabilities, a smartphone, a laptop or personal computer (PC) equipped with an internal or external mobile broadband modem, a tablet PC with radio communication capabilities, a portable electronic radio communication device, a sensor device equipped with radio communication capabilities or the like. The sensor may be any kind of weather sensor, such as wind, temperature, air pressure, humidity etc. As further examples, the sensor may be a light sensor, an electronic or electric switch, a microphone, a loudspeaker, a camera sensor etc. The term "user" may indirectly refer to the wireless communication device. Sometimes, the term "user" may be used to refer to the user equipment or the like as above. It shall be understood that the user may not necessarily involve a human user. The term "user" may also refer to a machine, a software component or the like using certain functions, methods and similar.

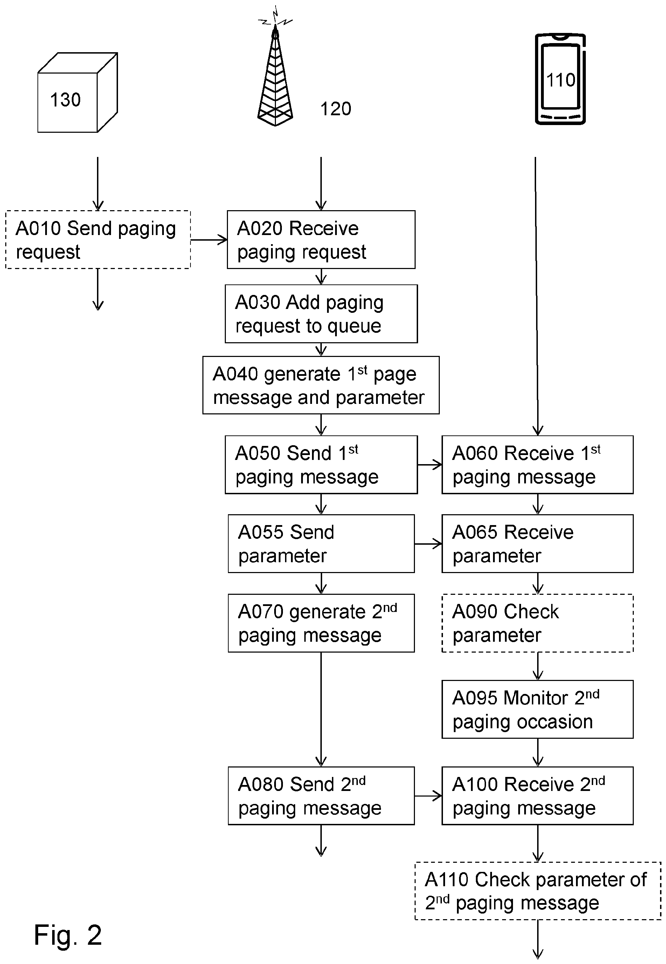

**Figure 2** illustrates an exemplifying method according to embodiments herein when implemented in the wireless communication system 100 of Figure 1.

The wireless communication device 110 performs a method for handling paging messages for paging of wireless communication devices in the wireless communication system 100. It shall be understood that the term "paging message" has its conventional meaning within the field of telecommunication systems, such as used in 3GPP TS 36.304.

The radio network node 120 performs a method for managing paging requests for instructing the radio network node 120 to page wireless communication devices in the wireless communication system 100.

One or more of the following actions may be performed in any suitable order.

### Action A010

The core network node 130 sends a paging request to the radio network node 120. In this manner, the radio network node 120 may be informed about that the radio network node 120 should send a paging message to the wireless communication device 110 for example in order to set up a phone call between the wireless communication device 110 and a remote party, such as another wireless communication device or the like.

### Action A020

After action A010, the radio network node 120 receives one or more paging requests from the core network node 130. As mentioned above, the radio network node is thus informed about that it should send a paging message in an upcoming paging frame, i.e. in an upcoming radio frame in which paging message may be sent by the radio network node 120.

### Action A030

The radio network node 120 adds the one or more paging requests to a queue of paging requests. In this manner, the radio network node 120 is able to keep track of which paging request of a plurality of paging requests received from the core network node 130 is in turn to be sent in an available paging occasion.

### Action A040

The radio network node 120 generates a first paging message and a parameter indicating existence of at least one second paging occasion. The first paging message may be associated to a first paging occasion. The generated first paging message is generated from a paging request in the queue of paging requests. This paging request is referred to as "a first paging request" herein. The generated parameter may also be generated based on the queue. For example, the parameter may indicate a length of the queue. The length may be given as a size, a number of paging requests, a number of paging messages etc. The parameter may be binary, i.e. indicate that one more paging occasions, e.g. in a subframe subsequent to the default paging occasion, typically a downlink subframe, is to be expected by the wireless communication device 110.

In some embodiments, the generating of the parameter may be only performed for one paging request being first in the queue of paging requests, wherein the queue includes two or more paging requests. This means that the radio network node 120 may generate the parameter only once per paging frame, i.e. an upcoming paging frame. This embodiment may in particular apply when the first paging message comprises the parameter and when the parameter indicates length of queue, or similar measure. Of course, it may happen that the upcoming paging frame does not have enough paging occasions in order to handle, or include, the entire queue, i.e. such that the queue becomes empty. In such case, the parameter may indicate a maximum number of paging occasions.

### Action A050

Now that the radio network node 120 has found out that the first paging is to be sent according to e.g. action A040, the radio network node 120 sends, at a first paging occasion within a paging frame, the first paging message to the wireless communication device 110.

### Action A060

Subsequent to action A050, the wireless communication device 110 receives, at the first paging occasion within the paging frame and from the radio network node 120, the first paging message.

Now returning to the actions of the radio network node 120.

### Action A055

In order to make the wireless communication device 110 aware of whether the at least one second paging occasion is present or not, the radio network node 120 sends the parameter to the wireless communication device 110.

According to some embodiments, the first paging message may comprise the parameter. This means that action A050 comprises action A055, i.e. action A050 and A055 is performed simultaneously as one action.

According to some other embodiments, the parameter may be comprised in a Radio Resource Control (RRC) message, which is known from 3GPP terminology.

According to some further embodiments, the parameter may be comprised in System Information, which is broadcast by the radio network node 120. It shall here be noted that the parameter defined herein is different from any existing parameters in the System Information in that the parameter herein enables, and allows for, the wireless communication device 110 to listen at more than one paging occasion per paging frame, or DRX cycle. This means that the wireless communication device 110 is allowed to receive more than one paging message per paging frame, or DRX cycle.

### Action A065

When action A055 has been performed, the wireless communication device 110 receives, from the radio network node 120, the parameter indicating existence of at least one second paging occasion. A first subframe location of the first paging occasion within the paging frame is different from at least one second subframe location of the at least one second paging occasion. In short, this means that the at least one second paging occasion may refer to any subframe being different from the default paging occasion. As an example of what is meant by that the first subframe location is different from the at least one second subframe location, it may be that the first subframe location may indicate subframe number 3 and the second subframe location may indicate subframe number 5, where the subframe number 3 and 5 may refer to the third and fifth subframes of a radio frame in LTE.

It shall here be mentioned, as already mentioned in the background section, that the term "paging occasion" refers to special subframes that are used for paging by the radio network node. In some standard specifications, there are four paging occasions per radio frame. In particular, this means that the at least one second paging occasion is not limited to one of the four possible default paging occasions. Thus, the term "subframe location" refer to a subframe's, e.g. the paging occasion's, position within the radio frame. In case of LTE, there are normally 10 subframes per each radio frame.

### Action A070

The radio network node 120 generates a second paging message based on the queue of paging requests. In one example, the second paging message is based on, e.g. derived from, the first paging request mentioned above in conjunction with action A040. In another example, the second paging message is based on a second paging request in the queue of paging requests. Evidently, "first" and "second" paging request are only used to distinguish one request from another request. This does not necessarily mean that e.g. the first paging request is "a first one" in the queue.

The second paging message is associated with a second paging occasion. This means that the second paging message is to be sent, by the radio network node 120, in the second paging occasion as in action A080. A first subframe location of the first paging occasion within the paging frame is different from at least one second subframe location of the at least one second paging occasion. Accordingly, the second paging occasion is different from any default paging occasion.

In some embodiments, the radio network node 120 may also generate a second parameter, aka a further parameter, indicating existence of one or more further paging occasions, i.e. similarly to the parameter in action A040.

### Action A080

The radio network node 120 sends, at the second paging occasion, the second paging message to the wireless communication device 110.

### Action A090

Subsequent to action A065, the wireless communication device 110 may check the parameter in order to find out whether or not to listen in said at least one second paging occasion, i.e. monitor or not monitor said at least one second paging occasion, as in action A095 below, in order to receive the second paging message when sent by the radio network node 120.

In this manner, the wireless communication device 110 may be made aware of in which paging occasions to listen for any existing paging message.

### Action A095

Accordingly, the wireless communication device 110 monitors the at least one second paging occasion, which monitoring may cause the wireless communication device to perform action A100 as described directly below.

### Action A100

The wireless communication device 110 receives, at the at least one second paging occasion, a second paging message from the radio network node.

Typically, the at least one second paging occasion may be located within the paging frame. However, in general it applies that at least one of the at least one second paging occasion may be located within the paging frame, or at least one of the at least one second paging occasion may be located in a radio frame subsequent to the paging frame, i.e. in the next frame or any other subsequent frame.

### Action A110

In some embodiments, for example when the second paging message comprises the second parameter, the wireless communication device 110 may check the second parameter in order to find out whether or not to listen in any indicated at least one second paging occasion.

Returning to the queue of action A030, it may be that the queue adds the paging request to the queue, e.g. only one queue. In case the first paging occasion is occupied, then as indicated by the parameter the second paging occasion may be used for transmission of the second paging message. Thus, the radio network node 120 does not have to wait until the next occurrence of a default paging occasion, such as the first paging occasion.

Moreover, the following examples may apply in various embodiments.

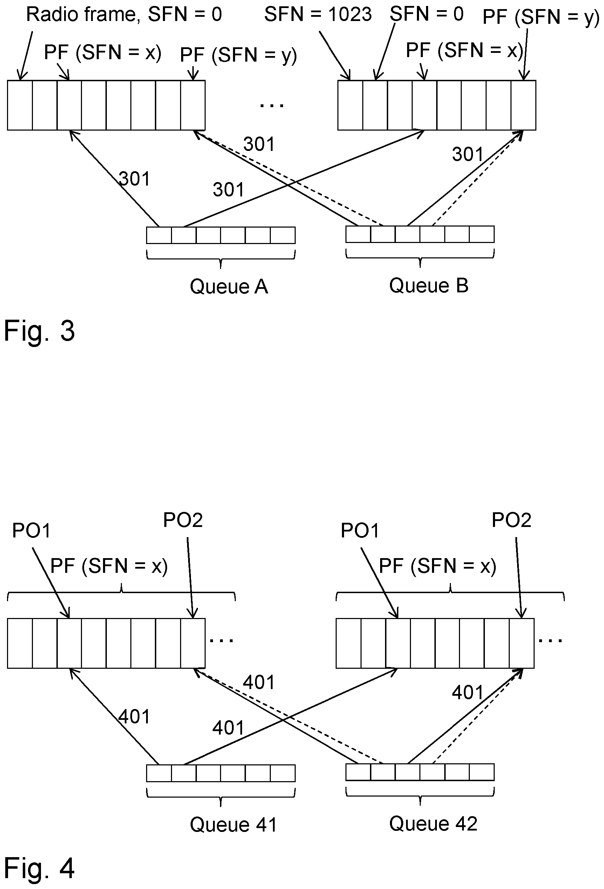

The queue may comprise a respective queue for each paging frame. Said each paging frame may comprise a paging occasion, i.e. the default paging occasion, that is different from the at least one second paging occasion indicated by the parameter. The wireless communication device 110 may not need to begin listening to paging messages until at, and possibly after, said default paging occasion. As an example, with reference to Figure 3, it may be that paging frames PF occur regularly depending on SFN as explained in the background section. As shown in Figure 3, paging frames PF occur for SFN = x and SFN = y. In this example, the radio network node 120 may handle the respective queue A, B separately for each paging frame. This means that the radio network node 120 may only pick 301 one or more paging requests from the respective queue A, B for each paging frame at a periodicity that is given by the periodicity of the SFN, i.e. after 1024 radio frames counting of radio frames start anew from SFN = 0. For a certain paging frame, the possibility for the radio network node 120 to pick from the respective queue occurs only every 10 * 1024 millisecond = 10.24 s. This means that a specific paging request in the respective queue may be sent by the radio network node 120 in any one or more paging occasions present in the certain paging frame, i.e. as identified by SFN = x or SFN = y. Figure 3 is simplified - typically there are four paging frames PF within a period of 10,24 s.

The queue may comprise a respective queue for each paging occasion. Similarly to the above, said each paging occasion, i.e. default paging occasion, is different from the at least one second paging occasion indicated by the parameter. As an example with reference to Figure 4, in which two paging frames PF are shown. The two paging frame may have the same SFN, i.e. equal to x as in the Figure, or they may have different SFN, i.e. one of the paging frames has SFN = x and the other paging frame has SFN = y or the like. In this example, there are two paging occasions PO1, PO2 in each paging frame PF. Accordingly, the radio network node 120 may handle the respective queues 41, 42 separately for each paging occasion PO1, PO2.

This means that the radio network node 120 may only pick 301 one or more paging requests from the respective queue 41, 42 for each occurrence of the respective paging occasion PO1, PO2. Occurrences of the respective paging occasions PO1, PO2 happen whenever the radio network node 120 detects that the coming radio frame is a paging frame as identified by the SFN according to known manners.

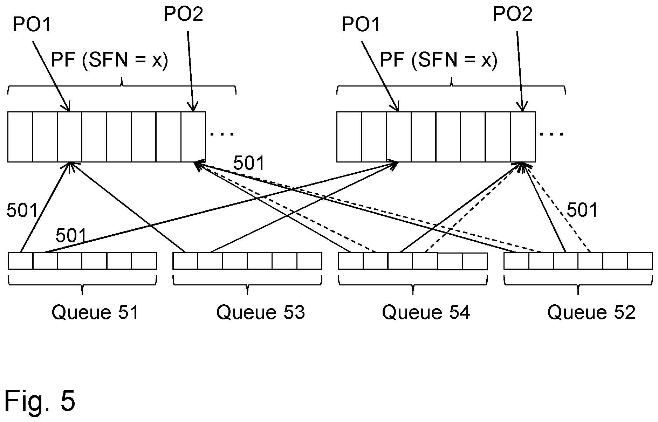

The queue may comprise a respective queue for each level of coverage enhancement associated with wireless communication devices. As an example with reference to Figure 5, in which two paging frames PF are shown. The two paging frame may have the same SFN, i.e. equal to x as in the Figure, or they may have different SFN, i.e. one of the paging frames has SFN = x and the other paging frame has SFN = y or the like. In this example, there are two paging occasions PO1, PO2 in each paging frame PF. The radio network node 120 may handle a respective queue 51, 53 for a first one of the two paging occasions, denoted PO1. Moreover, the radio network node 120 may handle a respective queue 52, 54 for a second one of the two paging occasions, denoted PO2. The radio network node 120 puts the paging requests in a respective queue depending on a level of coverage enhancement associated with the wireless communication device to which a paging message, generated from the paging request, is to be sent.

As an alternative, the radio network node 120 may generate paging messages based on the paging requests and then add the generated paging messages to a queue of paging messages, or one or more queues as explained above. In such alternative, action A030 may be performed after action A040. Moreover, action A030 is adding one or more paging messages, instead of paging requests, to the queue.

In the following description, the wireless communication device may be referred to as a UE for short and the radio network node may be referred to an eNB for short. But for reasons of consistency with the text above, the terms "wireless communication device" and "radio network node" will be used when applicable also in the following.

The term 'low complexity wireless communication device' below refers to an LTE wireless communication device with a receiver bandwidth that may be smaller than the total system bandwidth (e.g. 1.4 MHz UE receiver bandwidth and 20 MHz system bandwidth). The term 'low complexity wireless communication device' is also intended to cover the case with a normal complexity LTE wireless communication device configured to utilize coverage enhancement techniques designed for low complexity wireless communication device (meaning that the normal complexity wireless communication device is to some extent mimicking a low complexity wireless communication device).

When paging wireless communication devices in enhanced coverage, the radio network node utilizes a queue for paging message(s) intended for the same paging frame/occasion (PF/PO). This would be done for capacity reasons, as it is anticipated that for enhanced coverage operation the available radio resources will be very limited especially for the low complexity wireless communication devices. Moreover, it is possible that when coverage enhancement (CE) is applied, multiplexing multiple paging identities in a paging message is not feasible, that is, paging message would only contain the paging identity of one wireless communication device at a time.

### An exemplifying method performed by the radio network node, or eNB

The radio network node can dynamically decide if a queue is used for the paging messages or not. The following describes how the queueing approach would work.
1. The radio network node receives a paging request from MME for a low complexity wireless communication device (possibly requiring coverage enhancements as well). See also action A020 above.
2. For the paging occasion corresponding to the UE_ID and the DRX cycle of the wireless communication device, if there are other requests which have arrived earlier, put the newly arrived request in a queue. If the queue size is limited, then drop the message (don't process it) if the queue is full or wait until the next paging occasion for that wireless communication device. See also action A030 above.
3. For each paging occasion, process the queue, e.g. in First-Come First-Served (FCFS) order. When processing the queue, one or more paging messages and/or one or more parameters may be generated. See also action A040 above.
   a. In one embodiment the radio network node keeps a separate queue for each paging occasion.
   b. In another embodiment the radio network node keeps separate queues for each coverage enhancement level per paging occasion. The radio network node can then decide in which order to send the paging messages towards different coverage levels. In one example, it might be beneficial to send messages requiring larger numbers of repetitions first. In another example, it might be beneficial to send messages requiring larger number of repetitions last.
   c. In another embodiment the radio network node keeps one queue for all incoming paging requests and processes the queue in FCFS order but only processes those requests whose paging occasion is at the current time or has occurred already (In other words: if there are some requests for wireless communication devices whose paging occasion would be at a later time, don't process those until the said paging occasion time).
4. Send the paging message over the air. If the radio network node uses a queue it needs to inform the low complexity wireless communication devices monitoring the same paging occasion and/or additionally provide e.g. the size of the queue, the profile of its contents, e.g. which paging message is intended for a wireless communication device in which level of enhanced coverage or which paging message group if paging messages are grouped with respect to the enhanced coverage level, scheduling information for the paging messages or groups (if exists) in the queue etc. See also action A050 above.
   a. In one embodiment the contents of the paging message include information indicating the existence of the queue or the size of the queue in a format readable by all wireless communication devices listening to the same paging occasion.
      i. In one implementation only the first message for a particular paging occasion contains the queue information
      ii. In another implementation all paging messages include the queue information.
   b. In another embodiment the radio network node sends the queue information in dedicated signaling to the wireless communication devices e.g. using the RRC protocol. The wireless communication device then uses the signaled queue information in all future paging reception.
   c. In another embodiment the radio network node broadcasts the paging queue information in system information to at least all the affected wireless communication devices or broadcasts other similar information relating to how long the wireless communication devices need to continue to listen to the paging beyond their paging occasions, i.e. beyond their default paging occasions.
5. If the wireless communication device additionally requires coverage enhancements, the radio network node repeats the paging message as many times as needed to achieve the required coverage enhancement level. Similarly as in step 4, the radio network node would inform the affected wireless communication devices on the used repetition factors so that the wireless communication devices can calculate the total size of the queue, i.e. repetition factor X queue size in a Transmission Time Interval (TTI).
   a. In an alternative embodiment the radio network node directly signals the total size of the queue already taking into account the repetition factors (as in the embodiments listed for step 4.)

### An exemplifying method performed by the wireless communication device 110, or UE

The wireless communication device's first actions, e.g. action A060, are as today, with the addition of additional monitoring of the parameter due to the paging queue, which may render the at least one second paging occasion. The wireless communication devices wake up for monitoring the paging messages as today. However, the wireless communication device additionally, based on the parameter and/or the further parameter mentioned above, both, or one of these, are provided by the network, continues to monitor paging messages until they receive a paging message addressed to them or have monitored until the time, e.g. queue length, provided by the network.

In one example, the radio network node queues the paging messages, or the paging requests, instead of discarding the messages or postponing them to the next paging occasion, i.e. the next default paging occasion. The mobile devices, aka wireless communication devices, monitor the default paging occasion for an extended time, i.e. during the at least one second paging occasion, based on the number of paging messages in the queue or a bit (or similar flag) that indicates that the mobile device shall monitor the paging message the radio network node will transmit after the currently decoded paging message transmitted for the same paging frame/occasion.

### Queueing indicator and queue size indicator

A way to inform the wireless communication devices about queueing being used is to use a single bit indication in the paging message. By use the single bit indication, the radio network node informs the listening wireless communication device(s) that there are more paging messages in the current queue for the same paging occasion. This requires that a wireless communication device is able to decode the paging message so that the wireless communication device knows whether there is one or more further paging messages to listen for in the at least one second paging occasion.

In another embodiment (e.g. step 4 b in the above method for the radio network node) the explicit remaining queue size is signaled in the paging messages. The encoding of this information may take several bits depending on the maximum queue size.

Some embodiments include priorities to paging messages in a way that the radio network node may send the queued paging messages in some other order than FCFS. For example, sending messages with highest priority first, following the second highest and so on.

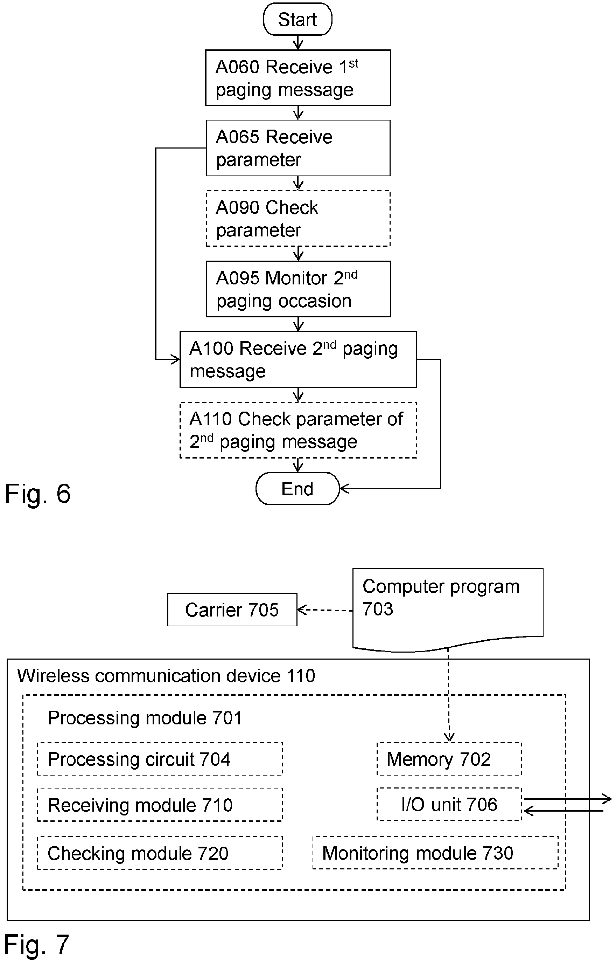

In **Figure 6****,** a schematic flowchart of exemplifying methods in the wireless communication device 110 is shown. Again, the same reference numerals as above have been used to denote the same or similar features, in particular the same reference numerals have been used to denote the same or similar actions.

One or more of the following actions may be performed in any suitable order.

### Action A060

Subsequent to action A050 in Figure 2, the wireless communication device 110 receives, at the first paging occasion within the paging frame and from the radio network node 120, the first paging message.

### Action A065

When action A055 in Figure 2 has been performed, the wireless communication device 110 receives, from the radio network node 120, the parameter indicating existence of at least one second paging occasion. A first subframe location of the first paging occasion within the paging frame is different from at least one second subframe location of the at least one second paging occasion.

### Action A090

Subsequent to action A065, the wireless communication device 110 may check the parameter in order to find out whether or not to listen in said at least one second paging occasion.

### Action A095

The wireless communication device 110 monitors the at least one second paging occasion.

### Action A100

The wireless communication device 110 receives, at the at least one second paging occasion, a second paging message from the radio network node.

### Action A110

In some embodiments, for example when the second paging message comprises the second parameter, the wireless communication device 110 may check the second parameter in order to find out whether or not to listen in any indicated at least one second paging occasion.

With reference to **Figure 7****,** a schematic block diagram of embodiments of the wireless communication device 110 Figure 1 is shown.

The wireless communication device 110 may comprise **a processing module 701,** such as a means, one or more hardware modules and/or one or more software modules for performing the methods described herein.

The wireless communication device 110 may further comprise **a memory 702.** The memory may comprise, such as contain or store, **a computer program 703.**

According to some embodiments herein, the processing module 701 comprises, e.g. 'is embodied in the form of' or 'realized by', **a processing circuit 704** as an exemplifying hardware module. In these embodiments, the memory 702 may comprise the computer program 703, comprising computer readable code units executable by the processing circuit 704, whereby the wireless communication device 110 is operative to perform the methods of Figure 2 and/or Figure 6.

In some other embodiments, the computer readable code units may cause the wireless communication device 110 to perform the method according to Figure 2 and/or 6 when the computer readable code units are executed by the wireless communication device 110.

Figure 7 further illustrates **a carrier 705,** or program carrier, which comprises the computer program 703 as described directly above.

In some embodiments, the processing module 701 comprises **an Input/Output unit 706,** which may be exemplified by a receiving module and/or a sending module as described below when applicable.

In further embodiments, the processing module 701 may comprise one or more of **a receiving module 710, a checking module 720,** and **a monitoring module 730,** as exemplifying hardware modules. In other examples, one or more of the aforementioned exemplifying hardware modules may be implemented as one or more software modules.

Accordingly, the wireless communication device 110 is configured for handling paging messages for paging of wireless communication devices in the wireless communication system 100.

Hence, according to the various embodiments described above, the wireless communication device 110, the processing module 701 and/or the receiving module 710 is configured for receiving, at a first paging occasion within a paging frame and from a radio network node 120, a first paging message;

The wireless communication device 110 and/or the processing module 701 and/or the receiving module 710, or a further receiving module (not shown) is configured for receiving, from the radio network node 120, a parameter indicating existence of at least one second paging occasion, wherein a first subframe location of the first paging

occasion within the paging frame is different from at least one second subframe location of the at least one second paging occasion.

The wireless communication device 110 and/or the processing module 701 and/or the monitoring module 730 is configured for monitoring the at least one second paging occasion.

The wireless communication device 110 and/or the processing module 701 and/or the receiving module 710, or a yet further receiving module (not shown) is configured for receiving, at the at least one second paging occasion, a second paging message from the radio network node.

As mentioned, at least one of the at least one second paging occasion may be located within the paging frame, or wherein at least one of the at least one second paging occasion may be located in a radio frame subsequent to the paging frame.

The first paging message may comprise the parameter. The parameter may be comprised in a RRC message. The parameter may be comprised in System Information, which is broadcast by the radio network node 120.

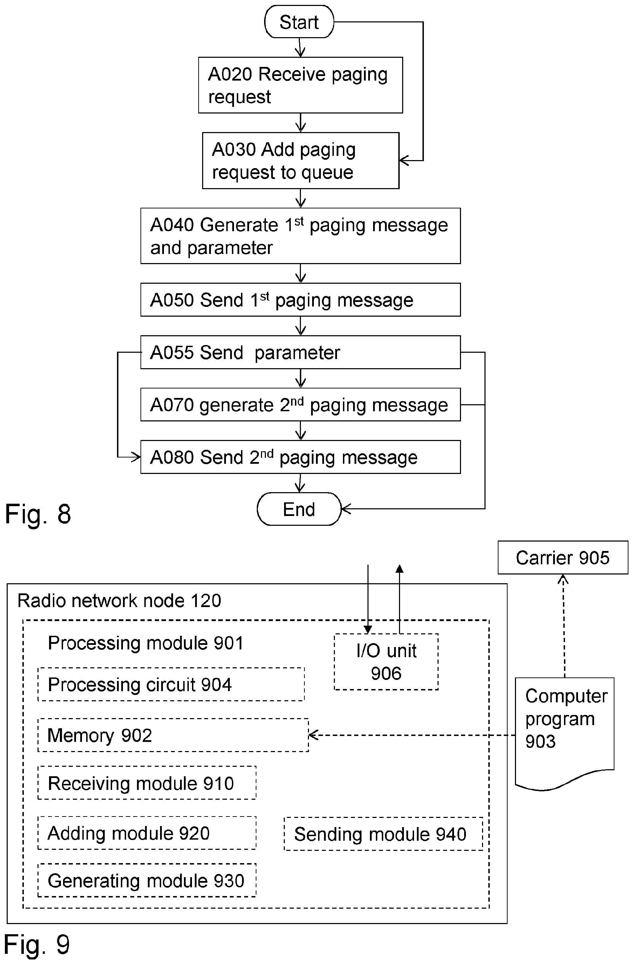

In **Figure 8****,** a schematic flowchart of exemplifying methods in the radio network node 120 is shown. Again, the same reference numerals as above have been used to denote the same or similar features, in particular the same reference numerals have been used to denote the same or similar actions.

One or more of the following actions may be performed in any suitable order.

### Action A020

After action A010 of Figure 2, the radio network node 120 receives one or more paging requests from the core network node 130.

### Action A030

The radio network node 120 adds the one or more paging requests to a queue of paging requests.

### Action A040

The radio network node 120 generates a first paging message and a parameter indicating existence of at least one second paging occasion. The first paging message may be associated to a first paging occasion. The generated first paging message is generated from a paging request in the queue of paging requests.

Returning to the queue of action A030, the following may apply.

The queue may comprise a respective queue for each paging frame. Said each paging frame may comprise a paging occasion, i.e. the default paging occasion, that is different from the at least one second paging occasion indicated by the parameter. The wireless communication device 110 may not need to begin listening to paging messages until at, and possibly after, said default paging occasion.

The queue may comprise a respective queue for each paging occasion. Similarly to the above, said each paging occasion, i.e. default paging occasion, is different from the at least one second paging occasion indicated by the parameter.

The queue may comprise a respective queue for each level of coverage enhancement associated with wireless communication devices.

As an alternative, the radio network node 120 may generate paging messages based on the paging requests and then add the generated paging messages to a queue of paging messages. In such alternative, action A030 may be performed after action A040. Moreover, action A030 is adding one or more paging messages, instead of paging requests, to the queue.

### Action A050

Now that the radio network node 120 has found out that the first paging is to be sent according to e.g. action A040, the radio network node 120 sends, at a first paging occasion within a paging frame, the first paging message to the wireless communication device 110.

### Action A055

In order to make the wireless communication device 110 aware of whether the at least one second paging occasion is present or not, the radio network node 120 sends the parameter to the wireless communication device 110.

According to some embodiments, the first paging message may comprise the parameter.

According to some other embodiments, the parameter may be comprised in a Radio Resource Control (RRC) message, which is known from 3GPP terminology.

According to some further embodiments, the parameter may be comprised in System Information, which is broadcast by the radio network node 120.

### Action A070

The radio network node 120 generates a second paging message based on the queue of paging requests. In one example, the second paging message is based on, e.g. derived from, the first paging request mentioned above in conjunction with action A040. In another example, the second paging message is based on a second paging request in the queue of paging requests. Evidently, "first" and "second" paging request are only used to distinguish one request from another request. This does not necessarily mean that e.g. the first paging request is "a first one" in the queue.

The second paging message is associated with a second paging occasion. A first subframe location of the first paging occasion within the paging frame is different from at least one second subframe location of the at least one second paging occasion.

In some embodiments, the radio network node 120 may also generate a second parameter, aka a further parameter, indicating existence of one or more further paging occasions, i.e. similarly to the parameter in action A040.

### Action A080

The radio network node 120 sends, at the second paging occasion, the second paging message to the wireless communication device 110.

With reference to **Figure 9****,** a schematic block diagram of embodiments of the radio network node 120 Figure 1 is shown.

The radio network node 120 may comprise **a processing module 901,** such as a means, one or more hardware modules and/or one or more software modules for performing the methods described herein.

The radio network node 120 may further comprise **a memory 902.** The memory may comprise, such as contain or store, **a computer program 903.**

According to some embodiments herein, the processing module 901 comprises, e.g. 'is embodied in the form of' or 'realized by', **a processing circuit 904** as an exemplifying hardware module. In these embodiments, the memory 902 may comprise the computer program 903, comprising computer readable code units executable by the processing circuit 904, whereby the radio network node 120 is operative to perform the methods of Figure 2 and/or Figure 8.

In some other embodiments, the computer readable code units may cause the radio network node 120 to perform the method according to Figure 2 and/or 8 when the computer readable code units are executed by the radio network node 120.

Figure 9 further illustrates **a carrier 905,** or program carrier, which comprises the computer program 903 as described directly above.

In some embodiments, the processing module 901 comprises **an Input/Output unit 906,** which may be exemplified by a receiving module and/or a sending module as described below when applicable.

In further embodiments, the processing module 901 may comprise one or more of **a receiving module 910, an adding module 920, a generating module 930,** and **a sending module 940** as exemplifying hardware modules. In other examples, one or more of the aforementioned exemplifying hardware modules may be implemented as one or more software modules.

Accordingly, the radio network node 120 is configured for managing paging requests for instructing the radio network node 120 to page wireless communication devices in the wireless communication system 100.

Hence, according to the various embodiments described above, the radio network node 120 and/or the processing module 901 and/or the receiving module 910 is configured for receiving one or more paging requests from a core network node (130).

The radio network node 120 and/or the processing module 901 and/or the adding module 920 is configured for adding the one or more paging requests to a queue of paging requests.

The radio network node 120 and/or the processing module 901 and/or the generating module 930 is configured for generating a first paging message and a parameter indicating existence of at least one second paging occasion, wherein the generated first paging message is generated from a paging request in the queue of paging requests;

The radio network node 120 and/or the processing module 901 and/or the sending module 940 is configured for sending, at a first paging occasion within a paging frame, the first paging message to a wireless communication device 110.

The radio network node 120 and/or the processing module 901 and/or the sending module 940, or a further sending module (not shown), is configured for sending the parameter to the wireless communication device 110.

The radio network node 120 and/or the processing module 901 and/or the generating module 930, or a further generating module (not shown), is configured for generating a second paging message based on the queue of paging requests, wherein the second paging message is associated with a second paging occasion, wherein a first subframe location of the first paging occasion within the paging frame is different from at least one second subframe location of the at least one second paging occasion; and

The radio network node 120 and/or the processing module 901 and/or the sending module 940, or a further sending module (not shown), is configured for sending, at the second paging occasion, the second paging message to the wireless communication device 110.

As mentioned, the paging message may comprise the parameter. The parameter may be comprised in a RRC message. The parameter may be comprised in System Information, which is broadcast by the radio network node 120. The generating of the parameter may be only performed for one paging request being first the queue of paging requests, wherein the queue includes two or more paging requests. The queue may comprise a respective queue for each paging frame. The queue may comprise a respective queue for each paging occasion. The queue may comprise a respective queue for each level of coverage enhancement associated with wireless communication devices.

As used herein, the term "radio network node", "node", or "network node" may refer to one or more physical entities, such as devices, apparatuses, computers, servers or the like. This may mean that embodiments herein may be implemented in one physical entity. Alternatively, the embodiments herein may be implemented in a plurality of physical entities, such as an arrangement comprising said one or more physical entities, i.e. the embodiments may be implemented in a distributed manner.

As used herein, the term "unit" may refer to one or more functional units, each of which may be implemented as one or more hardware modules and/or one or more software modules in a node.

As used herein, the term "program carrier", or "carrier", may refer to one of an electronic signal, an optical signal, a radio signal, and a computer readable medium. In some examples, the program carrier may exclude transitory, propagating signals, such as the electronic, optical and/or radio signal. Thus, in these examples, the program carrier may be a non-transitory carrier, such as a non-transitory computer readable medium.

As used herein, the term "processing module" may include one or more hardware modules, one or more software modules or a combination thereof. Any such module, be it a hardware, software or a combined hardware-software module, may be a determining means, estimating means, capturing means, associating means, comparing means, identification means, selecting means, receiving means, sending means or the like as disclosed herein. As an example, the expression "means" may be a module corresponding to the modules listed above in conjunction with the Figures.

As used herein, the term "software module" may refer to a software application, a Dynamic Link Library (DLL), a software component, a software object, an object according to Component Object Model (COM), a software component, a software function, a software engine, an executable binary software file or the like.

As used herein, the term "processing circuit" may refer to a processing unit, a processor, an Application Specific integrated Circuit (ASIC), a Field-Programmable Gate Array (FPGA) or the like. The processing circuit or the like may comprise one or more processor kernels.

As used herein, the expression "configured to/for" may mean that a processing circuit is configured to, or adapted to, by means of software configuration and/or hardware configuration, perform one or more of the actions described herein.

As used herein, the term "action" may refer to an action, a step, an operation, a response, a reaction, an activity or the like.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a DVD-disc, a Blu-ray disc, a software module that is received as a stream of data, a Flash memory, a hard drive, a memory card, such as a MemoryStick, a Multimedia Card (MMC), Secure Digital (SD) card, etc.

As used herein, the term "computer readable code units" may be text of a computer program, parts of or an entire binary file representing a computer program in a compiled format or anything there between.

As used herein, the terms "number" and/or "value" may be any kind of digit, such as binary, real, imaginary or rational number or the like. Moreover, "number" and/or "value" may be one or more characters, such as a letter or a string of letters. "Number" and/or "value" may also be represented by a bit string.

As used herein, the term "set of' may refer to one or more of something. E.g. a set of devices may refer to one or more devices, a set of parameters may refer to one or more parameters or the like according to the embodiments herein.

As used herein, the expression "in some embodiments" has been used to indicate that the features of the embodiment described may be combined with any other embodiment disclosed herein.

## Claims

1. A method, performed by a wireless communication device (110), for handling paging messages for paging of wireless communication devices in a wireless communication system (100), wherein the method comprises:
receiving (A065), from a radio network node (120), at a first paging occasion within a paging frame, a first paging message **characterised by**: a parameter indicating existence of at least one second paging occasion, wherein a first subframe location of the first paging occasion within the paging frame is different from at least one second subframe location of the at least one second paging occasion;
monitoring (A095) the at least one second paging occasion, and
receiving (A100), at the at least one second paging occasion, the second paging message from the radio network node (120),
wherein at least one of the at least one second paging occasion is located in a radio frame subsequent to the paging frame.

2. A method, performed by a radio network node (120), for managing paging requests for instructing the radio network node (120) to page wireless communication devices in a wireless communication system (100), wherein the method comprises:
receiving (A020) one or more paging requests from a core network node (130);
adding (A030) the one or more paging requests to a queue of paging requests **characterised by**:
generating (A040) a first paging message comprising a parameter indicating existence of at least one second paging occasion, wherein the generated first paging message is generated from a paging request in the queue of paging requests;
sending (A050), at a first paging occasion within a paging frame, the first paging message to a wireless communication device (110);
sending (A055) the parameter to the wireless communication device (110);
generating (A070) a second paging message based on the queue of paging requests, wherein the second paging message is associated with a second paging occasion, wherein a first subframe location of the first paging occasion within the paging frame is different from at least one second subframe location of the at least one second paging occasion, wherein at least one of the at least one second paging occasion is located in a radio frame subsequent to the paging frame; and
sending (A080), at the second paging occasion, the second paging message to the wireless communication device (110).

3. A wireless communication device (110) configured for handling paging messages for paging of wireless communication devices in a wireless communication system (100), wherein the wireless communication device (110) is configured for:
receiving, from a radio network node (120), at a first paging occasion with in a paging frame, a first paging message **characterised by**: a parameter indicating existence of at least one second paging occasion, wherein a first subframe location of the first paging occasion within the paging frame is different from at least one second subframe location of the at least one second paging occasion;
monitoring the at least one second paging occasion, and
receiving, at the at least one second paging occasion, the second paging message from the radio network node (120),
wherein at least one of the at least one second paging occasion is located in a radio frame subsequent to the paging frame.

4. A radio network node (120) configured for managing paging requests for instructing the radio network node (120) to page wireless communication devices in a wireless communication system (100), wherein the radio network node (120) is configured for:
receiving one or more paging requests from a core network node (130);
adding the one or more paging requests to a queue of paging requests;
generating a first paging message **characterised by**:
a parameter indicating existence of at least one second paging occasion, wherein the generated first paging message is generated from a paging request in the queue of paging requests;
sending, at a first paging occasion within a paging frame, the first paging message to a wireless communication device (110);
sending the parameter to the wireless communication device (110);
generating a second paging message based on the queue of paging requests, wherein the second paging message is associated with a second paging occasion, wherein a first subframe location of the first paging occasion within the paging frame is different from at least one second subframe location of the at least one second paging occasion, wherein at least one of the at least one second paging occasion is located in a radio frame subsequent to the paging frame; and
sending, at the second paging occasion, the second paging message to the wireless communication device (110).

5. The radio network node (120) according to claim 4, wherein the radio network node (120) is configured for performing the generating of the parameter for only one paging request being first in the queue of paging requests, wherein the queue includes two or more paging requests.

6. The radio network node (120) according to any one of claims 4-5, wherein the queue comprises a respective queue for each paging frame.

7. The radio network node (120) according to any one of claims 4-5, wherein the queue comprises a respective queue for each paging occasion.

8. The radio network node (120) according to any one of claims 4-5, wherein the queue comprises a respective queue for each level of coverage enhancement associated with wireless communication devices.

## Patentansprüche

1. Verfahren, das von einer drahtlosen Kommunikationsvorrichtung (110) durchgeführt wird, zum Handhaben von Paging-Nachrichten zum Pagen von drahtlosen Kommunikationsvorrichtungen in einem drahtlosen Kommunikationssystem (100), wobei das Verfahren umfasst:
Empfangen (A065) einer ersten Paging-Nachricht von einem Funknetzknoten (120) bei einem ersten Paging-Ereignis innerhalb eines Paging-Rahmens, **gekennzeichnet durch:** einen Parameter, der das Vorhandensein mindestens eines zweiten Paging-Ereignisses angibt, wobei sich eine erste Unterrahmenposition des ersten Paging-Ereignisses innerhalb des Paging-Rahmens von mindestens einer zweiten Unterrahmenposition des mindestens einen zweiten Paging-Ereignisses unterscheidet;
Überwachen (A095) des mindestens einen zweiten Paging-Ereignisses, und
Empfangen (A100) der zweiten Paging-Nachricht vom Funknetzknoten (120) bei dem mindestens einen zweiten Paging-Ereignis, wobei sich mindestens eines des mindestens einen zweiten Paging-Ereignisses in einem auf den Paging-Rahmen folgenden Funkrahmen befindet.

2. Verfahren, das von einem Funknetzknoten (120) durchgeführt wird, zum Verwalten von Paging-Anforderungen zum Anweisen des Funknetzknotens (120), drahtlose Kommunikationsvorrichtungen in einem drahtlosen Kommunikationssystem (100) zu pagen, wobei das Verfahren umfasst:
Empfangen (A020) einer oder mehrerer Paging-Anforderungen von einem Kernnetzknoten (130);
Hinzufügen (A030) der einen oder mehreren Paging-Anforderungen zu einer Warteschlange von Paging-Anforderungen, **gekennzeichnet durch:**
Erzeugen (A040) einer ersten Paging-Nachricht, die einen Parameter umfasst, der das Vorhandensein mindestens eines zweiten Paging-Ereignisses angibt, wobei die erzeugte erste Paging-Nachricht aus einer Paging-Anforderung in der Warteschlange von Paging-Anforderungen erzeugt wird;
Senden (A050) der ersten Paging-Nachricht an eine drahtlose Kommunikationsvorrichtung (110) bei einem ersten Paging-Ereignis innerhalb eines Paging-Rahmens;
Senden (A055) des Parameters an die drahtlose Kommunikationsvorrichtung (110);
Erzeugen (A070) einer zweiten Paging-Nachricht auf der Grundlage der Warteschlange von Paging-Anforderungen, wobei die zweite Paging-Nachricht mit einem zweiten Paging-Ereignis verbunden ist, wobei eine erste Unterrahmenposition des ersten Paging-Ereignisses innerhalb des Paging-Rahmens sich von mindestens einer zweiten Unterrahmenposition des mindestens einen zweiten Paging-Ereignisses unterscheidet, wobei mindestens eines des mindestens einen zweiten Paging-Ereignisses in einem auf den Paging-Rahmen folgenden Funkrahmen angeordnet ist; und
Senden (A080) der zweiten Paging-Nachricht an die drahtlose Kommunikationsvorrichtung (110) bei dem zweiten Paging-Ereignis.

3. Drahtlose Kommunikationsvorrichtung (110), die konfiguriert ist zum Handhaben von Paging-Nachrichten zum Pagen von drahtlosen Kommunikationsvorrichtungen in einem drahtlosen Kommunikationssystem (100), wobei die drahtlose Kommunikationsvorrichtung (110) konfiguriert ist zum: Empfangen einer ersten Paging-Nachricht von einem Funknetzknoten (120) bei einem ersten Paging-Ereignis in einem Paging-Rahmen, **gekennzeichnet durch:**
einen Parameter, der das Vorhandensein von mindestens einem zweiten Paging-Ereignis angibt, wobei eine erste Unterrahmenposition des ersten Paging-Ereignisses innerhalb des Paging-Rahmens sich von mindestens einer zweiten Unterrahmenposition des mindestens einen zweiten Paging-Ereignisses unterscheidet;
Überwachen des mindestens einen zweiten Paging-Ereignisses und Empfangen der zweiten Paging-Nachricht vom Funknetzknoten (120) bei dem mindestens einen zweiten Paging-Ereignis,
wobei sich mindestens eines des mindestens einen zweiten Paging-Ereignisses in einem auf den Paging-Rahmen folgenden Funkrahmen befindet.

4. Funknetzknoten (120), der zum Verwalten von Paging-Anforderungen konfiguriert ist, um den Funknetzknoten (120) anzuweisen, drahtlose Kommunikationsvorrichtungen in einem drahtlosen Kommunikationssystem (100) zu pagen, wobei der Funknetzknoten (120) konfiguriert ist zum:
Empfangen einer oder mehrerer Paging-Anforderungen von einem Kernnetzknoten (130); Hinzufügen der einen oder mehreren Paging-Anforderungen zu einer Warteschlange von Paging-Anforderungen;
Erzeugen einer ersten Paging-Nachricht, **gekennzeichnet durch:**
einen Parameter, der das Vorhandensein mindestens eines zweiten Paging-Ereignisses angibt, wobei die erzeugte erste Paging-Nachricht aus einer Paging-Anforderung in der Warteschlange von Paging-Anforderungen erzeugt wird;
Senden der ersten Paging-Nachricht an eine drahtlose Kommunikationsvorrichtung bei einem ersten Paging-Ereignis innerhalb eines Paging-Rahmens (110);
Senden des Parameters an die drahtlose Kommunikationsvorrichtung (110);
Erzeugen einer zweiten Paging-Nachricht auf der Grundlage der Warteschlange von Paging-Anforderungen, wobei die zweite Paging-Nachricht mit einem zweiten Paging-Ereignis verbunden ist, wobei eine erste Unterrahmenposition des ersten Paging-Ereignisses innerhalb des Paging-Rahmens sich von mindestens einer zweiten Unterrahmenposition des mindestens einen zweiten Paging-Ereignisses unterscheidet, wobei mindestens eines des mindestens einen zweiten Paging-Ereignisses in einem auf den Paging-Rahmen folgenden Funkrahmen angeordnet ist; und
Senden der zweiten Paging-Nachricht an die drahtlose Kommunikationsvorrichtung (110) bei dem zweiten Paging-Ereignis.

5. Funknetzknoten (120) gemäß Anspruch 4, wobei der Funknetzknoten (120) so konfiguriert ist, dass er die Erzeugung des Parameters für nur eine Paging-Anforderung durchführt, die in der Warteschlange von Paging-Anforderungen an erster Stelle steht, wobei die Warteschlange zwei oder mehr Paging-Anforderungen einschließt.

6. Funknetzknoten (120) gemäß einem der Ansprüche 4 bis 5, wobei die Warteschlange eine entsprechende Warteschlange für jeden Paging-Rahmen umfasst.

7. Funknetzknoten (120) gemäß einem der Ansprüche 4 bis 5, wobei die Warteschlange eine entsprechende Warteschlange für jedes Paging-Ereignis umfasst.

8. Funknetzknoten (120) gemäß einem der Ansprüche 4 bis 5, wobei die Warteschlange eine entsprechende Warteschlange für jede Ebene der Versorgungsverbesserung umfasst, die mit drahtlosen Kommunikationsvorrichtungen verbunden ist.

## Revendications

1. Procédé, mis en œuvre par un dispositif de communication sans fil (110), pour la prise en charge de radiomessages pour la radiomessagerie de dispositifs de communication sans fil dans un système de communication sans fil (100), dans lequel le procédé comprend :
la réception (A065), à partir d'un nœud de réseau radio (120), à une première occurrence de radiomessagerie au sein d'une trame de radiomessagerie, d'un premier radiomessage, **caractérisé par :**
un paramètre indiquant l'existence d'au moins une deuxième occurrence de radiomessagerie, dans lequel un premier emplacement de sous-trame de la première occurrence de radiomessagerie dans la trame de radiomessagerie est différent d'au moins un deuxième emplacement de sous-trame de l'au moins une deuxième occurrence de radiomessagerie ;
la surveillance (A095) de l'au moins une deuxième occurrence de radiomessagerie, et
la réception (A100), lors de l'au moins une deuxième occurrence de radiomessagerie, du deuxième radiomessage provenant du nœud de réseau radio (120),
dans lequel au moins l'une de l'au moins une deuxième occurrence de radiomessagerie est située dans une trame radio successive à la trame de radiomessagerie.

2. Procédé, mis en œuvre par un nœud de réseau radio (120), pour gérer des demandes de radiomessagerie afin d'ordonner au nœud de réseau radio (120) d'effectuer une radiomessagerie de dispositifs de communication sans fil dans un système de communication sans fil (100), dans lequel le procédé comprend :
la réception (A020) d'une ou plusieurs demandes de radiomessagerie en provenance d'un nœud de réseau central (130) ;
l'ajout (A030) des une ou plusieurs demandes de radiomessagerie à une file d'attente de demandes de radiomessagerie :
**caractérisé par :**
la génération (A040) d'un premier radiomessage comprenant un paramètre indiquant l'existence d'au moins une deuxième occurrence de messagerie, dans lequel le premier radiomessage généré est généré à partir d'une demande de radiomessagerie dans la file d'attente des demandes de radiomessagerie ;
l'envoi (A050), à une première occurrence de radiomessagerie au sein d'une trame de radiomessagerie, du premier radiomessage à un dispositif de communication sans fil (110) ;
l'envoi (A055) du paramètre au dispositif de communication sans fil
(110) ;
la génération (A070) d'un deuxième radiomessage sur la base de la file d'attente des demandes de radiomessagerie, dans lequel le deuxième radiomessage est associé à une deuxième occurrence de radiomessagerie, dans lequel un premier emplacement de sous-trame de la première occurrence de radiomessagerie au sein de la trame de radiomessagerie est différent d'au moins un deuxième emplacement de sous-trame de l'au moins une deuxième occurrence de radiomessagerie, dans lequel au moins un de l'au moins une deuxième occurrence de radiomessagerie est située dans une trame radio successive à la trame de radiomessagerie ; et l'envoi (A080), à la deuxième occurrence de radiomessagerie, du deuxième radiomessage au dispositif de communication sans fil (110).

3. Un dispositif de communication sans fil (110) configuré pour prendre en charge des radiomessages pour la radiomessagerie de dispositifs de communication sans fil dans un système de communication sans fil (100), dans lequel le dispositif de communication sans fil (110) est configuré pour :
recevoir, depuis un nœud de réseau radio (120), lors d'une première occurrence de radiomessagerie au sein d'une trame de radiomessagerie, d'un premier radiomessage **caractérisé par :**
un paramètre indiquant l'existence d'au moins une deuxième occurrence de radiomessagerie, dans lequel un premier emplacement de sous-trame de la première occurrence de radiomessagerie dans la trame de radiomessagerie est différent d'au moins un deuxième emplacement de sous-trame de l'au moins une deuxième occurrence de radiomessagerie ;
surveiller l'au moins une deuxième occurrence de radiomessagerie, et
recevoir, lors de l'au moins une deuxième occurrence de radiomessagerie, le deuxième radiomessage provenant du nœud de réseau radio (120),
dans lequel au moins l'une de l'au moins une deuxième occurrence de radiomessagerie est située dans une trame radio successive à la trame de radiomessagerie.

4. Nœud de réseau radio (120) configuré pour gérer des demandes de radiomessagerie pour ordonner au nœud de réseau radio (120) d'effectuer une radiomessagerie de dispositifs de communication sans fil dans un système de communication sans fil (100), dans lequel le nœud de réseau radio (120) est configuré pour :
recevoir une ou plusieurs demandes de radiomessagerie en provenance d'un nœud de réseau central (130) ;
ajouter lesdites une ou plusieurs demandes de radiomessagerie à une file d'attente de demandes de radiomessagerie ;
générer un premier radiomessage **caractérisé par :**
un paramètre indiquant l'existence d'au moins une deuxième occurrence de radiomessagerie, dans lequel le premier radiomessage généré est généré à partir d'une demande de radiomessagerie dans la file d'attente de demandes de radiomessagerie ;
envoyer, à une première occurrence de radiomessagerie au sein d'une trame de radiomessagerie, le premier radiomessage à un dispositif de communication sans fil (110) ;
envoyer le paramètre au dispositif de communication sans fil (110) ;
générer un deuxième radiomessage sur la base des demandes de la file d'attente de radiomessagerie, dans lequel le deuxième radiomessage est associé à une deuxième occurrence de radiomessagerie, dans lequel un premier emplacement de sous-trame de la première occurrence de radiomessagerie au sein de la trame de radiomessagerie est différent d'au moins un deuxième emplacement de sous-trame de l'au moins une deuxième occurrence de radiomessagerie, dans lequel au moins une de l'au moins une deuxième occurrence de radiomessagerie est située dans une trame radio successive à la trame de radiomessagerie ; et
envoyer, à la deuxième occurrence de radiomessagerie, le second radiomessage au dispositif de communication sans fil (110).

5. Nœud de réseau radio (120) selon la revendication 4, dans lequel le nœud de réseau radio (120) est configuré pour effectuer la génération du paramètre pour qu'une seule demande de radiomessagerie soit première dans la file d'attente de demandes de radiomessagerie, dans lequel la file d'attente inclut deux demandes de radiomessagerie ou plus.

6. Nœud de réseau radio (120) selon l'une quelconque des revendications 4 à 5, dans lequel la file d'attente comprend une file d'attente respective pour chaque trame de radiomessagerie.

7. Nœud de réseau radio (120) selon l'une quelconque des revendications 4 à 5, dans lequel la file d'attente comprend une file d'attente respective pour chaque occurrence de radiomessagerie.

8. Nœud de réseau radio (120) selon l'une quelconque des revendications 4 à 5, dans lequel la file d'attente comprend une file d'attente respective pour chaque niveau d'amélioration de couverture associé à des dispositifs de communication sans fil.
